# EUROPÄISCHE PATENTSCHRIFT

(11) **EP 0 581 119 B1**
(45) Veröffentlichungstag und Bekanntmachung des Hinweises auf die Patenterteilung: **20.03.1996**
(21) Anmeldenummer: 93111300.5
(22) Anmeldetag: 14.07.1993
(51) Int. Cl.: F16K 1/24

(54) **Klappenventil**
Butterfly valve
Vanne papillon

(30) Priorität: 15.07.1992 DE 4223299
(43) Veröffentlichungstag der Anmeldung: 02.02.1994
(73) Patentinhaber: Zimmermann & Jansen GmbH, D-52322 Düren (DE)
(72) Erfinder: Irnich, Franz-Josef, Dipl.-Ing., D-52393 Hürtgenwald-Gey (DE)
(74) Vertreter: MEISSNER, BOLTE & PARTNER

(56) Entgegenhaltungen:
- DE-A- 2 247 789
- DE-A- 2 528 714
- DE-C- 3 508 318
- FR-A- 2 369 477
- FR-A- 2 383 369
- GB-A- 405 439
- US-A- 3 967 813

## Beschreibung

Die Erfindung betrifft ein Klappenventil nach dem Oberbegriff des Anspruchs 1.

Aus der DE-AS 22 47 789 ist ein derartiges Klappenventil bekannt. Dieses bekannte Klappenventil umfaßt ein Ventilgehäuse mit einer axialen Durchströmöffnung. Des weiteren weist dieses bekannte Klappenventil eine Klappenwelle auf, die aus dem Ventilgehäuse herausragt, die Durchströmöffnung im wesentlichen diametral durchsetzt und über eine außerhalb des Ventilgehäuses angeordnete Antriebseinrichtung betätigbar ist. Schließlich ist bei diesem bekannten Klappenventil noch eine an der Klappenwelle angebrachte Verschlußklappe zum Verschließen der Durchströmöffnung vorgesehen. Die Verschlußklappe selbst wird bei Bewegung aus der Verschließstellung in die Freigabestellung der Durchströmöffnung zunächst vom Ventilsitz abgehoben und sodann in der Durchströmöffnung verschwenkt. Umgekehrt wird die Verschlußklappe bei Bewegung aus der Freigabestellung in die Verschließstellung der Durchströmöffnung zunächst in der Durchströmöffnung verschwenkt und anschließend auf den Ventilsitz aufgesetzt.

Als besonders nachteilig bei diesem bekannten Klappenventil hat sich der hohe Konstruktions- und Herstellungsaufwand herausgestellt. Um nämlich vor der Verschwenkbewegung der Verschlußklappe ein Abheben dieser vom Ventilsitz bzw. nach der Verschwenkbewegung der Verschlußklappe ein Aufsetzen dieser auf den Ventilsitz zu ermöglichen, ist eine verhältnismäßig komplizierte Bauweise zur exakten Steuerung vorgesehen. Demnach erfolgt die Steuerung über eine Führung von mehreren Führungsstiften in entsprechend ausgebildeten Führungsnuten. Aufgrund der vielen einzelnen Bauteile reichen insofern bereits geringe Fertigungsungenauigkeiten aus, um eine einwandfreie und sichere Betätigung der Verschlußklappe zu erschweren bzw. sogar zu verhindern. Darüberhinaus gestaltet sich die Montage dieses bekannten Klappenventils noch dadurch sehr schwierig, als die Führungsstifte zum Teil federbelastet eingebaut werden müssen.

Zur Vermeidung der vorgenannten Nachteile wird in der DE-AS 25 28 714 vorgeschlagen, die Verschlußklappe exzentrisch auf einer Betätigungswelle zu lagern, wobei die Exzentrizität nur wenige Millimeter betragen soll. Durch diese exzentrische Verschlußklappenlagerung wird beim Öffnungs- und Schließvorgang der Verschlußklappe eine geradlinige Abhebe- beziehungsweise Anlegebewegung erreicht. Die daran anschließende Schwenkbewegung der Verschlußklappe erfolgt zwangsläufig infolge eines außerhalb der Durchströmöffnung angebrachten, drehbar im Gehäuse und an der Verschlußklappe befestigten Hebels. Dieser Hebel muß aufgrund der geringen Exzentrizität der Verschlußklappenlagerung sehr lang gebaut sein, um bei einem noch vertretbaren Drehwinkel der Betätigungswelle die Verschlußklappe in Öffnungsstellung verschwenken zu können. Eine funktionsgerechte Bauweise auf engstem Raum ist nicht möglich. Darüber hinaus sind aufgrund der genannten geringen Exzentrizität erhebliche Drehkräfte erforderlich, um die Verschlußklappe in öffnungsstellung und umgekehrt zu bringen.

Schließlich ist bei der bekannten Konstruktion keine zentrische Anpressung der Verschlußklappe beziehungsweise des Klappentellers auf dem Gehäusedichtsitz über das Betätigungsorgan vorgesehen. Daher ist auch keine gleichmäßige Anpressung der Verschlußklappe auf dem Dichtsitz möglich. Dies hat zur Folge, daß bei höheren Druckdifferenzen Verformungen an der Verschlußklappe und damit Undichtigkeiten über dem Dichtsitz auftreten. Auch sind die Exzenterlager sehr verschleißanfällig, so daß ein dauerhaft sicherer Betrieb nicht gewährleistet ist.

Die bekannte Konstruktion nach der US-PS 3,967,813 zeichnet sich ebenfalls durch lange Antriebshebel aus. Es müssen zum dichten Verschließen der Klappe hohe Kräfte und Momente aufgewandt werden. Die Verschlußklappe kann daher bei hohen Drücken undicht werden.

Auch ist nachteilig, daß das bekannte Getriebe für die Bewegung der Verschlußklappe in Klappenmitte angeordnet ist, d.h. im Strömungsweg liegt.

In der DE-PS 35 08 318 ist schließlich eine weitere Variante einer Absperrklappe offenbart, bei der das Abheben der Verschlußklappe vom Gehäusedichtsitz beziehungsweise das Anlegen an diesen durch ein radial wirksames Kulissengetriebe bewirkt wird, d.h. nicht durch Drehbewegung einer mit der Verschlußklappe in Wirkverbindung stehenden Betätigungswelle. Diese bekannte Konstruktion erlaubt daher auch nur kleine Lüfthübe. Dementsprechend hat die Absperrklappe keinen planparallel aufsetzenden Dichtsitz. Es muß zur Abdichtung eine zusätzliche Werkstoffdichtung eingesetzt werden, die einen Hochtemperatureinsatz unmöglich macht. Da schließlich ebenfalls keine zentrische Anpressung der Verschlußklappe über das Betätigungsorgan vorgesehen ist, ist auch keine gleichmäßige Anpressung der Verschlußklappe auf dem Gehäusedichtsitz möglich mit der Folge, daß hier dieselben Undichtigkeitsprobleme wie bei der Konstruktion nach der DE-AS 25 28 714 auftreten.

Letztendlich ist das bekannte Betätigungsorgan wegen seiner offenen Kulissenführung auch nur für absolut feststoffreie Medien geeignet. Feststoff würde nämlich in die Kulissenführung eindringen und sich dort ablagern mit der Folge, daß das Kulissengetriebe blockiert oder gar zerstört würde. Auch können durch die Punktberührung zwischen Betätigungsorgan und Kulissenführung nur kleine Kräfte aufgenommen oder übertragen werden. Daher ist diese bekannte Konstruktion nur für kleine Drücke geeignet.

Ausgehend vom Stand der Technik liegt der Erfindung die Aufgabe zugrunde, ein Klappenventil gemäß Oberbegriff des Anspruches 1 bereitzustellen, das einen geringen Konstruktionsaufwand auf engstem Raum aufweist, damit zusammenhängend eine ausgesprochen einfache Herstellung und Montage ermöglicht und insbesondere auch bei hohen Temperaturen und Differenzdrücken in beiden Richtungen des Strömungskanals eine einwandfreie und sichere Betätigung der Verschlußklappe gewährleistet, wobei die für die eigentliche Verstellung der Verschlußklappe notwendigen Bauteile aus dem Strömungsquerschnitt des Klappenventils herausverlegt sind.

Diese Aufgabe wird durch die kennzeichnenden Maßnahmen des Anspruchs 1 gelöst.

Durch die erfindungsgemäße Ausbildung, die Klappenwelle über wenigstens ein außerhalb des Ventilgehäuses liegendes Ende zugleich mit einem Hebelsystem und einer Betätigungswelle, welche eine in der Verschließstellung zu der Längsachse der Klappenwelle parallel liegende Längsachse aufweist und mittels der Antriebseinrichtung drehbar ist, derart zu verbinden, daß das Ende der Klappenwelle beim Abheben vom Ventilsitz und Verschwenken und umgekehrt um die Längsachse der Betätigungswelle auf einer Kreisbahn um die Betätigungswelle bewegbar ist, läßt sich eine ausgesprochen einfache, wenig aufwendige Bauweise erhalten. Darüber hinaus ist der Herstellungs- und Montageaufwand gering gehalten. Einerseits lassen sich durch entsprechende Positionierung der Betätigungswelle bzw. des Betätigungselementes zu dem Hebelsystem, welche jeweils an dem wenigstens einen Ende der Klappenwelle angreifen, mögliche Fertigungsungenauigkeiten ohne weiteres ausgleichen. Andererseits ist die Montage des Klappenventils nicht zuletzt aufgrund der Tatsache sehr vereinfacht, da die für die eigentliche Verstellung der Verschlußklappe notwendigen Bauteile sämtlich aus dem Strömungsquerschnitt des Klappenventils, d.h. außerhalb des Ventilgehäuses, herausverlegt sind. Dies wirkt sich nicht zuletzt in vorteilhafter Weise auf eine einwandfreie und sichere Betätigung der Verschlußklappe des Klappenventils nach der Erfindung aus. Ungeachtet dessen lassen sich zudem aufgrund des Hebelsystems und damit zusammenhängend der verlängerten Hebelarme größere zentrisch wirkende Schließkräfte erhalten. Dies ermöglicht die Verwendung des erfindungsgemäßen Klappenventils selbst bei extremen Einsatzbedingungen, d.h. bei sehr hohen Drücken beziehungsweise Druckdifferenzen in beiden Richtungen relativ zur Absperrklappe und/oder hohen Temperaturen von bis weit über 600°C. Insbesondere bei einseitiger Ausführung des Klappenventils, d.h. bei Anordnung eines Hebelsystems und einer Betätigungswelle an nur einem Ende der Klappenwelle, lassen sich zusätzlich noch größere Schließkräfte wegen der als Hebelarm wirkenden Klappenwelle erreichen. Durch die erfindungsgemäße Ausgestaltung des Klappenventils ist schließlich auch ein sehr sanftes Aufsetzen der Verschlußklappe auf den Ventilsitz durch ein sogenanntes "Eindrehen" möglich, das eine Erhöhung von dessen Lebensdauer zur Folge hat.

Durch die erfindungsgemäße Aufteilung des Betätigungsorgans für die Verschlußklappe in eine sich längs eines Durchmessers der Verschlußklappe erstreckende Klappenwelle einerseits und eine gesonderte, außerhalb des Ventilgehäuses wirksame Betätigungswelle andererseits können zum einen hohe Öffnungs- und Schließmomente aufgebracht und übertragen und zum anderen hohe Biegemomente aufgenommen werden, die durch die Druckdifferenz an der Verschlußklappe entstehen.

Auch ist durch die erfindungsgemäße Konstruktion eine zentrische Anpressung der Vershlußklappe auf dem Gehäusedichtsitz möglich, so daß auch bei hohen Druckdifferenzen keine Undichtigkeiten auftreten.

Vorteilhafte konstruktive Details des erfindungsgemäßen Klappenventils sind in den Unteransprüchen beschrieben.

Von großer Bedeutung für eine vereinfachte Herstellung und Montage wie auch für eine einwandfreie und sichere Betätigung der Verschlußklappe sind die Maßnahmen nach den Ansprüchen 2 und 3. Zum einen können Fertigungsungenauigkeiten oder dergl. leicht entsprechend den Maßnahmen nach Anspruch 2 durch die Verkippbarkeit der Klappenwelle gegenüber der Längsachse der Betätigungswelle egalisiert werden. Zum anderen ist durch die exzentrische Lage der Klappenwelle gegenüber der Betätigungswelle und durch deren Verdrehbarkeit eine Bewegung des Endes der Klappenwelle auf einer Kreisbahn um die Betätigungswelle sichergestellt. Die Maßnahmen nach Anspruch 4, zwischen das Betätigungselement und dem einen Ende der Klappenwelle eine Kugel-Pfannen-Gelenkverbindung oder dergl. anzuordnen, erleichtern neben einer vereinfachten Herstellung eine gewisse Selbstjustierung der Verschlußklappe bei deren Montage.

Durch die konstruktiven Maßnahmen nach Anspruch 4, nämlich das Hebelsystem mit einem ersten und einem zweiten Hebelelement auszugestalten, die gegenseitig aneinander gekoppelt und zum einen mit dem Ende der Klappenwelle sowie zum anderen mit dem Ventilgehäuse oder dergl. verbunden sind, wird eine weiterhin vereinfachte Herstellung und Montage sichergestellt und eine hohe Funktionssicherheit des gesamten Klappenventils gewährleistet.

Zudem dienen die Merkmale nach Anspruch 5, die entsprechende Ankopplung zwischen erstem und zweitem Hebelelement, dem einen Ende der Klappenwelle und dem Ventilgehäuse über Zapfen und Kugel-Pfannen-Gelenkverbindungen vorzunehmen, der Bewegung des Endes der Klappenwelle auf einer Kreisbahn um die Betätigungswelle wie auch zusätzlich der Senkung von Herstellungs- und Montagekosten des Klappenventils insgesamt.

Besonders vorteilhaft sind darüber hinaus die erfindungsgemäßen Maßnahmen nach Anspruch 6, da die Betätigungswelle zum Teil bzw. das Betätigungselement, das eine Ende der Klappenwelle sowie das Hebelsystem kompakt und kleinbauend von dem Gehäuse oder dergl. aufgenommen sind. Des weiteren ist lediglich für die Abdichtung der aus diesem Gehäuse oder dergl. herausragenden Betätigungswelle zu sorgen.

Weiterhin liegt es vorzugsweise im Rahmen der Erfindung nach Anspruch 7, das Ventilgehäuse mit einem kulissenartigen Durchgang entsprechend der kreisförmigen Bewegungsbahn der Klappenwelle zu versehen, durch welchen sich die Klappenwelle mit dem einen Ende in das Gehäuse oder dergl. hindurcherstreckt. Auf diese Weise wird der Durchgang zwischen Durchströmöffnung einerseits und dem Inneren des Gehäuses oder dergl., in welchem teilweise die Betätigungswelle, das Betätigungselement, das eine Ende der Klappenwelle sowie das Hebelsystem untergebracht sind, andererseits möglichst klein gehalten.

Insbesondere im Zusammenhang mit den Maßnahmen nach Anspruch 8 ist es wegen des sehr klein gehaltenen kulissenartigen Durchgangs möglich, Gas und damit geführten Staub aus der Durchströmöffnung des Ventilgehäuses vor dem Inneren des Gehäuses oder dergl., in welchem das Betätigungselement, das Hebelsystem etc. aufgenommen sind, fernzuhalten.

Schließlich liegt es ebensogut im Rahmen der Erfindung gemäß Anspruch 9, die Klappenwelle über ihre zwei außerhalb des Ventilgehäuses liegenden Enden jeweils zugleich mit einem Hebelsystem und einer Betätigungswelle der zuvor erläuterten Art so zu verbinden, daß die Enden der Klappenwelle beim Abheben vom Ventilsitz und Verschwenken und umgekehrt um die Längsachse der jeweiligen Betätigungswelle auf einer Kreisbahn um die entsprechende Betätigungswelle bewegbar ist.

Da die Abhebe- bzw. Aufsetzbewegung der Verschlußklappe auf dem Ventilsitz, insbesondere bei der einseitigen Ausführung des erfindungsgemäßen Klappenventils, eher einem sogenannten "Eindrehen" gleichkommt, ist es entsprechend den Maßnahmen nach Anspruch 10 von Vorteil, daß der Ventilsitz eine zur axialen Durchströmöffnung senkrecht angeordnete Dichtfläche aufweist. Vorzugsweise kann der Ventilsitz auch entsprechend dem Merkmal nach Anspruch 11 eine zur axialen Durchströmöffnung konisch verlaufende Dichtfläche aufweisen.

Durch die Maßnahmen nach den Ansprüchen 12 und/oder 13 wird erreicht, daß die Verschlußklappe jeweils entgegen der Drehrichtung der Betätigungswelle verschwenkt wird. Dieser Bewegungsablauf steht im Gegensatz zum gesamten eingangs erwähnten Stand der Technik und erlaubt ein funktionssicheres Abheben und Anlegen der Verschlußklappe zum beziehungsweise am Gehäusedichtsitz bei voller Verschwenkbarkeit der Klappe um 90°, ohne daß die Betätigungswelle um mehr als 90° verdreht werden muß. Aufgrund der gewählten Verhältnisse läßt sich das Hebelsystem relativ klein bauen, wobei noch bemerkt sei, daß bei dem erfindungsgemäßen Hebelsystem das außerhalb des Ventilgehäuses liegende Ende der Klappenwelle beim Öffnen oder Schließen der Verschlußklappe durch die Strecklage der Lenker- beziehungsweise Hebelverbindung "Betätigungswelle - Klappenwelle - Drehgelenk zwischen erstem und zweitem Hebelelement" bewegt wird. Dadurch wird bei einem Drehwinkel der Betätigungswelle von nur 90° sowohl die Lüftbewegung der Verschlußklappe relativ zum Gehäusedichtsitz und eine volle Verschwenkung der Klappenwelle und damit Verschlußklappe um ebenfalls 90° erzielt.

Weitere Merkmale, Vorteile und Einzelheiten der Erfindung ergeben sich aus der nachfolgenden Beschreibung einiger bevorzugter Ausführungsformen der Erfindung sowie anhand der Zeichnungen. Hierbei zeigen:
- Fig. 1: einen Querschnitt durch eine Ausführungsform eines erfindungsgemäßen Klappenventils mit einer Verschlußklappe in der Verschließstellung und - wie durch eine strichpunktierte Linie angedeutet - in der Freigabestellung der Durchströmöffnung;
- Fig. 2: eine teilweise aufgebrochene Seitenansicht einer Ausführungsform des erfindungsgemäßen Klappenventils entsprechend Pfeil II in Fig. 1; und
- Fig. 3: einen Längsschnitt durch eine weitere Ausführungsform eines erfindungsgemäßen Klappenventils entsprechend Fig. 2 längs der Linie III-III in Fig. 1 in vergrößerter Darstellung.

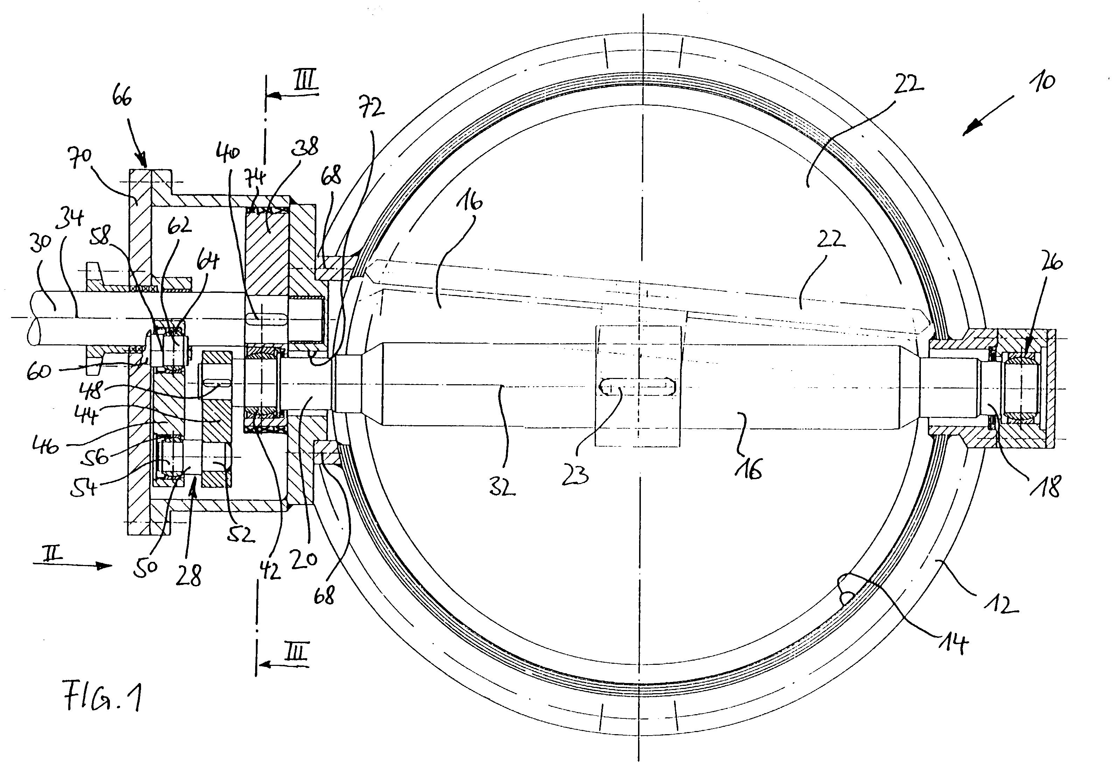

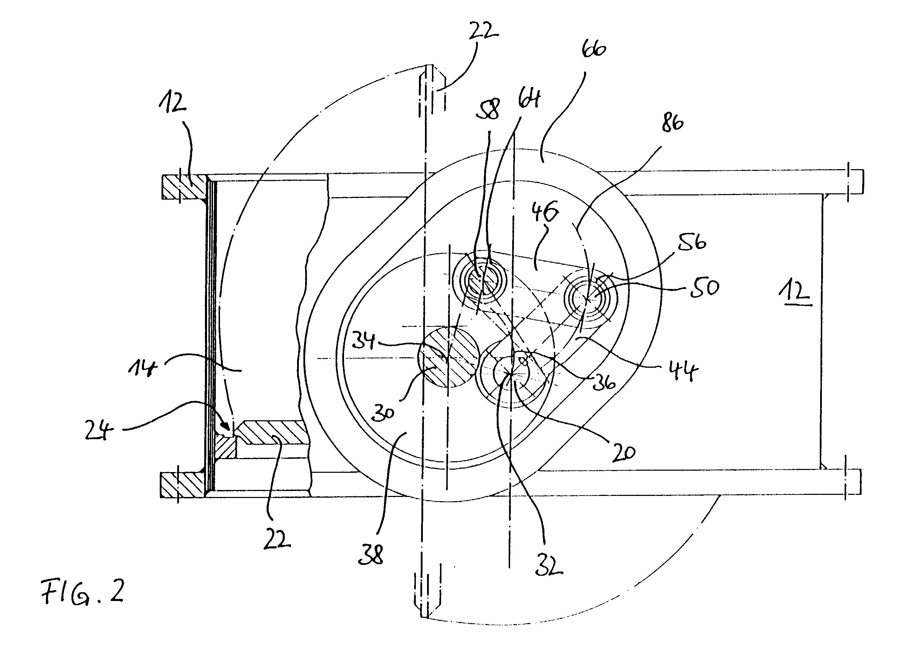

In den Fig. 1 und 2 ist eine Ausführungsform eines Klappenventils 10 in der Verschließstellung (ausgezogene Linie) ebenso wie in der Freigabestellung (strichpunktierte Linie) dargestellt. Das Klappenventil 10 umfaßt ein Ventilgehäuse 12 mit einer axialen Durchströmöffnung 14. Des weiteren umfaßt das Klappenventil 10 eine Klappenwelle 16, die mit ihren beiden Enden 18, 20 aus dem Ventilgehäuse 12 herausragt, die Durchströmöffnung 14 im wesentlichen diametral durchsetzt und über eine außerhalb des Ventilgehäuses 12 angeordnete Antriebseinrichtung (nicht gezeigt) betätigbar ist. An der Klappenwelle 16 ist weiterhin eine Verschlußklappe 22 zum Verschließen der Durchströmöffnung 14 mittels einer Feder-Nut-Verbindung 23 angebracht.

Bei Bewegung aus der Verschließstellung in die Freigabestellung der Durchstsrömöffnung 14 wird die Verschlußklappe 22 zunächst vom Ventilsitz 24 abgehoben und sodann in der Durchströmöffnung 14 verschwenkt. Bei Bewegung aus der Freigabestellung in die Verschließstellung wird die Verschlußklappe 22 umgekehrt zuerst in der Durchströmöffnung 14 verschwenkt und sodann auf den Ventilsitz 24 aufgesetzt.

Die Klappenwelle 16 ist über ein Ende 18 in einem Lager 26 herkömmlicher Bauweise abgestützt. Das Ende 18 durchgreift dabei das Ventilgehäuse 12. Das Lager 26 selbst ist außerhalb des Ventilgehäuses 12 angeordnet, um die Strömung in der Durchströmöffnung nicht zu beeinflussen, sofern sich die Verschlußklappe 22 in der Freigabestellung befindet. Das Lager 26 ist hier entsprechend Fig. 1 als eine Kugel-Pfannen-Gelenkverbindung oder dergl. ausgebildet.

Die Klappenwelle 16 ist über das andere, außerhalb des Ventilgehäuses 12 liegende Ende 20 zugleich mit einem Hebelsystem 28 und einer Betätigungswelle 30 verbunden. Die Betätigungswelle 30 weist eine in der Verschließstellung zu der Längsachse 32 der Klappenwelle 16 parallel liegende Längsachse 34 auf und ist mittels der Antriebseinrichtung (nicht dargestellt) drehbar. Die Ankopplung der Klappenwelle 16 über das eine Ende 20 an das Hebelsystem 28 und die Betätigungswelle 30 ist dabei derart gewählt, daß das Ende 20 der Klappenwelle 16 beim Abheben vom Ventilsitz 24 und Verschwenken und umgekehrt um die Längsachse 34 der Betätigungswelle 30 auf einer Kreisbahn 36 - wie deutlich aus Fig. 2 hervorgeht - um die Betätigungswelle 30 bewegbar ist.

Auf der Betätigungswelle 30 ist ein Betätigungselement 38 drehfest aufgebracht, und zwar hier mittels einer Feder-Nut-Verbindung 40. Das in den Fig. 1 und 2 dargestellte Betätigungselement 38 ist scheibenförmig ausgestaltet. In dem Betätigungselement 38 ist weiterhin die Klappenwelle 16 mit dem einen Ende 20 zur Betätigungswelle 30 exzentrisch, drehbar und gegenüber der Längsachse 34 der Betätigungswelle 30 verkippbar aufgenommen. Zu diesem Zweck stützt das Betätigungselement 38 die Klappenwelle 16 mit dem einen Ende 20 über eine Kugel-Pfannen-Gelenkverbindung 42 oder dergl. ab.

Das Hebelsystem 28 weist ein erstes Hebelelement 44 und ein zweites Hebelement 46 auf, die im wesentlichen parallel zur Bewegungsebene des Betätigungselementes 38, d.h. hier senkrecht zur Blattebene von Fig. 1, angeordnet sind. Das erste Hebelelement 44 ist an dem einen Ende 20 der Klappenwelle 16 z.B. über eine Feder-Nut-Verbindung 48 drehgesichert angebracht. Das zweite Hebelelement 46 ist einerseits mit dem ersten Hebelelement 44 und dem Ventilgehäuse oder dergl. drehbar und andererseits gegenüber dem ersten Hebelelement 44 bzw. dem Ventilgehäuse oder dergl. verkippbar verbunden.

Wie Fig. 1 erkennen läßt, sind das erste und das zweite Hebelelement 44, 46 über einen Zapfen 50 oder dergl. miteinander dreh- und verkippbar verbunden. Das eine Ende 52 des Zapfens 50 ist an dem ersten Hebelelement 46 beispielsweise durch Schweißen befestigt, während das andere Ende 54 des Zapfens 50 mittels einer Kugel-Pfannen-Gelenkverbindung 56 oder dergl. von dem zweiten Hebelelement 46 aufgenommen ist. Ebensogut ist es aber denkbar, daß das eine Ende 52 des Zapfens 50 an das zweite Hebelelement 46 angeschweißt ist und daß das andere Ende 54 des Zapfens mittels einer solchen Kugel-Pfannen-Gelenkverbindung oder dergl. aufgenommen ist.

Des weiteren sind das zweite Hebelelement 44 und das Ventilgehäuse oder dergl. bzw. ein Teil hiervon über einen Zapfen 58 oder dergl. miteinander dreh- und verkippbar verbunden. Das eine Ende 60 des Zapfens 58 ist an dem Ventilgehäuse oder dergl. angeschweißt, während das andere Ende 62 des Zapfens 58 von dem zweiten Hebelelement 44 über eine Kugel-Pfannen-Gelenkverbindung 64 aufgenommen ist. Genau sogut kann das andere Ende 62 des Zapfens 58 an dem zweiten Hebelelement 44 angeschweißt, das eine Ende 60 des Zapfens 58 mit einer derartigen Kugel-Pfannen-Gelenkverbindung oder dergl. an dem Ventilgehäuse oder einem Teil hiervon aufgenommen sein.

Nach Fig. 1 sind das Betätigungselement 38 und das Hebelsystem 28 in einem Gehäuse 66 oder dergl. untergebracht, welches am Ventilgehäuse 12 beispielsweise über Schrauben 68 montierbar ist. Bei der vorliegenden Ausführungsform ist das zweite Hebelelement 46 insofern an der Wandung bzw. an der Abschlußplatte 70 des Gehäuses 66 oder dergl. auf der dem Ventilgehäuse 12 abgewandten Seite angelenkt. Demnach liegen das an der Betätigungswelle 30 befestigte und mit dem einen Ende 20 der Klappenwelle 16 in Eingriff stehende Betätigungselement 38, das erste, an dem einen Ende 20 der Klappenwelle 16 drehverbundene Hebelelement 44 und das zweite, zwischen erstem Hebelelement 44 und Abschlußplatte 70 angeordnete Hebelelement 46 - ausgehend von der Klappenwelle 16 in Richtung hin zur Betätigungswelle 30 aufeinanderfolgend - nebeneinander in dem Gehäuses 66 oder dergl.

Das Ventilgehäuse 12 ist mit einem nicht näher dargestellten, kulissenartigen Durchgang 72 entsprechend der Kreisbahn 36 der Klappenwelle 16 ausgestattet. Durch den Durchgang 72 erstreckt sich die Klappenwelle 16 mit dem einen Ende 20 von der Durchströmöffnung 14 in das Gehäuse 66 oder dergl. hindurch. Insbesondere zur Gas- und Staubabdichtung ist das vorzugsweise als Scheibe ausgebildete Betätigungselement 38, welches in dem Gehäuse 66 oder dergl. auf der dem Ventilgehäuse 12 bzw. dem kulissenartigen Durchgang 72 zugewandten Seite angeordnet ist, mit einer Dichtung, z.B. in Form einer Dichtmanschette 74 oder dergl. versehen.

Von Vorteil hat sich weiterhin bei der Ausführungsform des erfindungsgemäßen Klappenventils 10 nach den Fig. 1 und 2 erwiesen, daß der Ventilsitz 24 eine zur axialen Durchströmöffnung 14 senkrecht angeordnete Dichtfläche - wie in Fig. 2 gezeigt - aufweist. Eine solche Ausgestaltung der Dichtfläche ist insofern bei der einseitigen Ausführungsform des Klappenventils 10 von Vorteil, als diese vor dem Abheben der Verschlußklappe 22 von dem Dichtsitz 24 bzw. vor dem Aufsetzen der Verschlußklappe 22 auf den Ventilsitz 24 in Abhängigkeit der Kreisbahn 36 eine Bewegung erfährt, die einem sogenannten "Eindrehen" gleichkommt. In gleichem Maße kann der Ventilsitz 24 auch eine zur axialen Durchströmöffnung 14 konisch verlaufende Dichtfläche aufweisen.

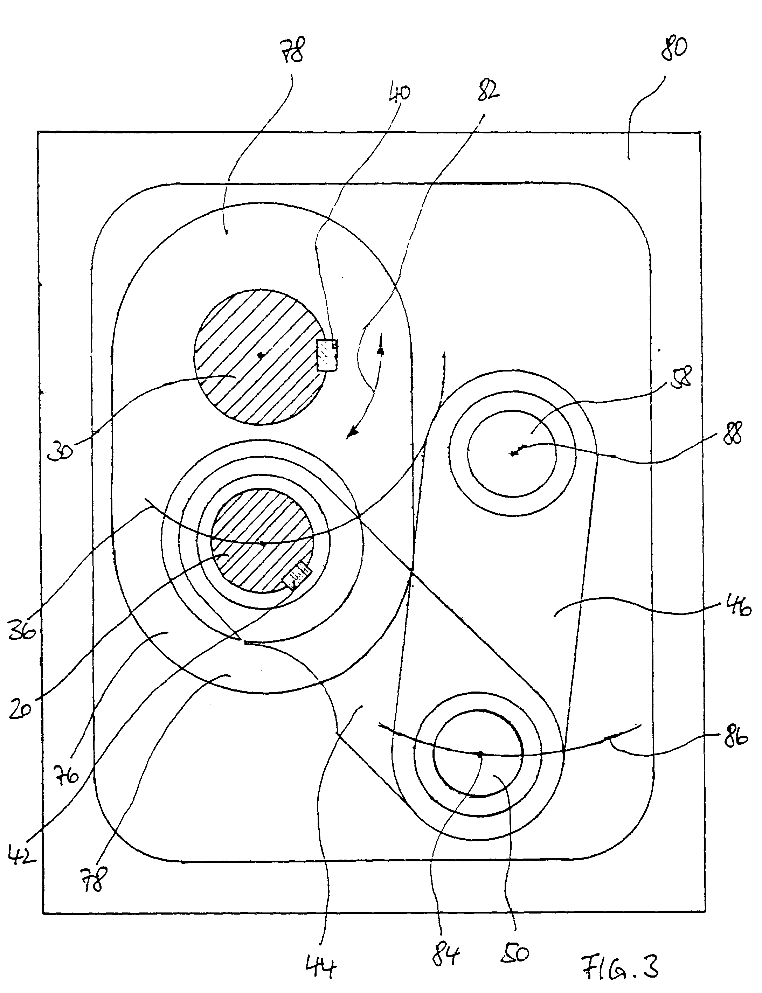

In der Fig. 3 ist eine weitere Ausführungsform eines erfindungsgemäßen Klappenventils 10 dargestellt, die sich im wesentlichen von derjenigen nach den Fig. 1 und 2 durch eine andersartige Ausgestaltung des Betätigungselementes 76 unterscheidet. So ist das Betätigungselement 76 nach Fig. 3 nicht scheibenförmig, sondern im wesentlichen als Platte mit halbkreisförmigen Endbereichen 78 ausgestaltet. Weiterhin ist das Gehäuse 80 oder dergl., in welchem ein Teil der Betätigungswelle 30 mit dem Betätigungselement 76 und das Hebelsystem 28 mit erstem und zweitem Hebelelement 44, 46 untergebracht sind, der Form des Betätigungselements 76 angepaßt. Zu den Bauteilen der Ausführungsform des Klappenventils 10 nach den Fig. 1 und 2 entsprechende Bauteile sind daher mit gleichen Bezugsziffern versehen.

Deutlich läßt sich der Fig. 3 entnehmen, daß der von der nicht gezeigten Antriebseinrichtung aufgezwungene Kraftfluß zunächst von der Betätigungswelle 30 über die Feder-Nut-Verbindung 40 auf das Betätigungselement 76 übertragen wird. Durch Drehung der Betätigungswelle 30 gemäß Doppelpfeil 82 wird dem Betätigungselement 76 eine dem Doppelpfeil 82 gleichgerichtete Drehung aufgezwungen. Das Ende 20 der Klappenwelle 16, welches mit dem Betätigungselement 76 drehbar und zugleich verkippbar über die Kugel-Pfannen-Gelenkverbindung 42 verbunden ist, bewegt sich somit um die Längsachse 34 der Betätigungswelle 30 auf der Kreisbahn 36 um die Betätigungswelle 30. Gleichzeitig erhält das Ende 20 der Klappenwelle 16 eine Führung über das Hebelsystem 28, indem nämlich die Dreh- und Verkippbewegung der Klappenwelle 16 durch die kinematische Verknüpfung vollzogen wird. Demnach bewegt sich entsprechend Fig. 3 die Längsachse 84 des Zapfens 50 längs der Kreisbahn 86 um die Längsachse 88 des an das Gehäuse 80 angekoppelten Zapfens 58. Bei der Bewegung der Verschlußklappe 22 aus der Verschließstellung in die Freigabestellung der Durchströmöffnung 14 sowie umgekehrt bei der Bewegung der Verschlußklappe 22 aus der Freigabestellung zurück in die Verschließstellung der Durchströmöffnung 14 erfolgt lediglich eine Richtungsumkehr.

Die Erfindung ist dabei nicht auf die dargestellten Ausführungsbeispiele der Klappenventile 10 nach den Fig. 1 und 2 bzw. 3 beschränkt. Beispielsweise ist es ebenso denkbar, daß die Klappenwelle 16 über ihre beiden außerhalb des Ventilgehäuses 12 liegenden Enden 18, 20 jeweils zugleich mit einem Hebelsystem - entsprechend dem Hebelsystem 28 - und einer Betätigungswelle - entsprechend der Betätigungswelle 30 -, welche eine in der Verschließstellung zu der Längsachse 32 der Klappenwelle 16 parallel liegende Längsachsen - entsprechend der Längsachse 34 - aufweist und mittels einer gemeinsamen oder voneinander separierten Antriebseinrichtung drehbar sind, verbunden ist. Und zwar derart, daß die Enden 18, 20 der Klappenwelle 16 beim Abheben vom Ventilsitz 24 und Verschwenken und umgekehrt um die Längsachse - entsprechend der Längsachse 34 - der jeweiligen Betätigungswelle auf einer Kreisbahn - entsprechend der Kreisbahn 36 - um die jeweilige Betätigungswelle bewegbar ist.

## Patentansprüche

1. Klappenventil (10), umfassend ein Ventilgehäuse (12) mit einer axialen Durchströmöffnung (14), eine aus dem Ventilgehäuse (12) herausragende, die Durchströmöffnung (14) im wesentlichen diametral durchsetzende und über eine außerhalb des Ventilgehäuses (12) angeordnete Antriebseinrichtung betätigbare Klappenwelle (16) sowie eine an der Klappenwelle (16) angebrachte Verschlußklappe (22) zum Verschließen der Durchströmöffnung (14), wobei die Verschlußklappe (22) bei Bewegung aus der Verschließstellung in die Freigabestellung der Durchströmöffnung (14) zunächst vom Ventilsitz (24) abhebbar und sodann in der Durchströmöffnung (14) verschwenkbar ist, und umgekehrt,
**dadurch gekennzeichnet**,
daß die Klappenwelle (16) über wenigstens ein außerhalb des Ventilgehäuses (12) liegendes Ende (20) zugleich mit einem am Ventilgehäuse oder an einem Teil hiervon angelenkten Hebelsystem (28) und einer eine in der Verschließstellung zu der Längsachse (32) der Klappenwelle (16) sich parallel erstreckenden Betätigungswelle (30) derart verbunden ist, daß bei entsprechender Betätigung der Betätigungswelle (30) das Ende (20) der Klappenwelle (16) beim Abheben vom Ventilsitz (24) und Verschwenken auf einer Kreisbahn (36) um die Betätigungswelle (30) herum bewegbar ist.

2. Klappenventil nach Anspruch 1,
dadurch gekennzeichnet,
daß die Betätigungswelle (30) ein mit der Betätigungswelle (30) drehverbundenes Betätigungselement (38) umfaßt, in dem die Klappenwelle (16) mit dem einen Ende (20) zur Betätigungswelle (30) exzentrisch, drehbar und gegenüber der Längsachse (34) der Betätigungswelle (30) verkippbar aufgenommen ist.

3. Klappenventil nach Anspruch 2,
dadurch gekennzeichnet,
daß das Betätigungselement (38) die Klappenwelle (16) mit dem einen Ende (20) über eine Kugel-Pfannen-Gelenkverbindung (42) oder dergl. abstützt.

4. Klappenventil nach Anspruch 1 bis 3,
dadurch gekennzeichnet,
daß das Hebelsystem (28) ein erstes und ein zweites Hebelelement (44, 46) aufweist, die im wesentlichen parallel zur Bewegungsebene des Betätigungselementes (38) angeordnet sind, wobei das erste Hebelelement (44) an dem einen Ende (20) der Klappenwelle (16) drehgesichert angebracht ist und wobei das zweite Hebelelement (46) mit dem ersten Hebelelement (44) und dem Ventilgehäuse oder dergl. drehbar und gegenüber dem ersten Hebelelement (44) bzw. dem Ventilgehäuse oder dergl. verkippbar verbunden ist.

5. Klappenventil nach Anspruch 4,
dadurch gekennzeichnet,
daß das erste und das zweite Hebelelement (44, 46) bzw. das zweite Hebelelement (44) und das Ventilgehäuse oder dergl. über einen Zapfen (50, 58) oder dergl. miteinander dreh- und verkippbar verbunden sind, dessen eines Ende (52, 60) an dem ersten oder zweiten Hebelelement (44, 46) bzw. an dem zweiten Hebelelement (44) oder dem Ventilgehäuse befestigt ist und dessen anderes Ende (54, 62) mittels einer Kugel-Pfannen-Gelenkverbindung (56, 64) oder dergl. von dem zweiten oder ersten Hebelelement (56, 54) bzw. von dem Ventilgehäuse oder dem zweiten Hebelelement (44) aufgenommen ist.

6. Klappenventil nach wenigstens einem der Ansprüche 1 bis 5,
dadurch gekennzeichnet,
daß das Betätigungselement (38) und das Hebelsystem (28) in einem Gehäuse (66) oder dergl. untergebracht sind, das an dem Ventilgehäuse (12) montierbar ist, wobei das zweite Hebelelement (46) an dem Gehäuse (66) oder dergl. auf der dem Ventilgehäuse (12) abgewandten Seite angelenkt ist.

7. Klappenventil nach wenigstens einem der Ansprüche 1 bis 6,
dadurch gekennzeichnet,
daß das Ventilgehäuse (12) mit einem kulissenartigen Durchgang (72) entsprechend der Kreisbahn (36) des einen Endes (20) der Klappenwelle (16) versehen ist, durch welchen sich die Klappenwelle (16) mit dem einen Ende (20) in das Gehäuse (66) oder dergl. hindurch erstreckt.

8. Klappenventil nach wenigstens einem der Ansprüche 1 bis 7,
dadurch gekennzeichnet,
daß das Betätigungselement (38), das in dem Gehäuse (66) oder dergl. auf der dem Ventilgehäuse (12) bzw. den kulissenartigen Durchgang (72) zugewandten Seite angeordnet ist, mit einer Dichtmanschette (74) oder dergl. versehen ist, wobei das Betätigungselement (38) vorzugsweise als den kulissenartigen Durchgang (72) abdeckende Scheibe ausgebildet ist.

9. Klappenventil nach wenigstens einem der Ansprüche 1 bis 8,
dadurch gekennzeichnet,
daß die Klappenwelle (16) über zwei außerhalb des Ventilgehäuses (12) liegende Enden (18, 20) jeweils zugleich mit einem Hebelsystem (28) und einer eine in der Verschließstellung zu der Längsachse (32) der Klappenwelle (16) parallel liegende Längsachse (34) aufweisenden sowie mittels der Antriebseinrichtung drehbaren Betätigungswelle (30) derart verbunden ist, daß die Enden (18, 20) der Klappenwelle (16) beim Abheben vom Ventilsitz (24) und Verschwenken und umgekehrt um die Längsachse (34) der jeweiligen Betätigungswelle (30) auf einer Kreisbahn (36) um die entsprechende Betätigungswelle (30) bewegbar sind.

10. Klappenventil nach wenigstens einem der Ansprüche 1 bis 9,
dadurch gekennzeichnet,
daß der Ventilsitz (24) eine zur axialen Durchströmöffnung (14) senkrecht angeordnete Dichtfläche aufweist.

11. Klappenventil nach wenigstens einem der Ansprüche 1 - 8,
dadurch gekennzeichnet,
daß der Ventilsitz eine zur axialen Durchströmöffnung (14) konisch verlaufende Dichtfläche aufweist.

12. Klappenventil nach einem oder mehreren der Ansprüche 411,
dadurch gekennzeichnet,
daß das erste (44) und zweite (46) Hebelelement jeweils etwa gleiche Länge aufweisen und daß der Abstand zwischen der Längsachse (32) der Klappenwelle (16) und der Längsachse (34) der Betätigungswelle (30) einerseits sowie der Abstand zwischen der Längsachse (34) der Betätigungswelle (30) und der Anlenkung (Zapfen 58) des zweiten Hebelelements (46) am Gehäuse jeweils kleiner ist als die Länge des ersten (44) und zweiten (46) Hebelelements.

13. Klappenventil nach Anspruch 12,
dadurch gekennzeichnet,
daß der Abstand zwischen der Längsachse (34) der Betätigungswelle (30) und der Anlenkung (Zapfen 58) des zweiten Hebelelements (46) am Gehäuse größer ist als der Abstand zwischen der Längsachse (34) der Betätigungswelle (30) und der Längsachse (32) der Klappenwelle (16) (Fig. 2).

## Claims

1. Flap valve (10) comprising a valve housing (12) having an axial through-flow orifice (14), a flap shaft (16), which protrudes out of the valve housing (12), substantially diametrically penetrates the through-flow orifice (14) and is actuated by way of a drive device disposed outside the valve housing (12), and a closure flap (22) disposed on the flap shaft (16) for the purpose of closing the through-flow orifice (14), wherein the closure flap (22) when being moved out of the closed position into the position which releases the through-flow orifice (14) can first be raised from the valve seat (24) and then pivoted in the through-flow orifice (14) and vice versa, characterised in that the flap shaft (16) is connected by way of at least one end (20) lying outside the valve housing (12) simultaneously to a lever system (28) articulated to the valve housing or to a part thereof and to an actuating shaft (30) which in the closed position extends parallel with the longitudinal axis (32) of the flap shaft (16), in such a manner that when correspondingly actuating the actuating shaft (30) the end (20) of the flap shaft (16) can be moved when being raised from the valve seat (24) and pivoted on a circular path (36) about the actuating shaft (30).

2. Flap valve according to claim 1, characterised in that the actuating shaft (30) comprises an actuating member (38) which is rotationally connected to the actuating shaft (30) and receives the flap shaft (16) with the end (20) in such a manner that it is eccentric and rotatable with respect to the actuating shaft (30) and such that it can tilt with respect to the longitudinal axis (34) of the actuating shaft (30).

3. Flap valve according to claim 2, characterised in that the actuating member (38) supports the flap shaft (16) with one end (20) by way of a ball and socket joint connection (42) or similar.

4. Flap valve according to claim 1 to 3, characterised in that the lever system (28) comprises a first and a second lever member (44, 46) which are disposed substantially parallel with the plane of movement of the actuating member (38), wherein the first lever member (44) is non-rotatably attached to the end (20) of the flap shaft (16) and wherein the second lever member (46) is attached to the first lever member (44) and to the valve housing or similar in a rotatable manner and such as to be able to tilt with respect to the first lever member (44) and the valve housing or similar.

5. Flap valve according to claim 4, characterised in that the first and the second lever member (44,46) and also the second lever member (44) and the valve housing or similar are connected to each other in a rotatable and tiltable manner by way of a journal (50, 58) or similar whose end (52, 60) is attached to the first or second lever member (44, 46) and to the second lever member (44) or the valve housing and whose other end (54, 62) is received by means of a ball and socket joint connection (56, 64) or similar by the second or first lever member (56, 54) and by the valve housing or the second lever member (44).

6. Flap valve according to at least one of claims 1 to 5, characterised in that the actuating member (38) and the lever system (28) are accommodated in a housing (66) or similar which can be mounted on the valve housing (12), wherein the second lever member (46) is articulated to the housing (66) or similar on the side remote from the valve housing (12).

7. Flap valve according to at least one of claims 1 to 6, characterised in that the valve housing (12) is provided with a crank-like through-passage (72), corresponding to the circular path (36) of one end (20) of the flap shaft (16), through which the flap shaft (16) extends with one end (20) into the housing (66) or similar.

8. Flap valve according to at least one of claims 1 to 7, characterised in that the actuating member (38), which is disposed in the housing (66) or similar on the side facing the valve housing (12) and the crank-like through-passage (72), is provided with a sealing collar (74) or similar, wherein the actuating member (38) is formed preferably as a disc covering the crank-like through-passage (72).

9. Flap valve according to at least one of claims 1 to 8, characterised in that the flap shaft (16) is connected by way of two ends (18, 20) lying outside the valve housing (12) in each case simultaneously to a lever system (28) and to an actuating shaft (30) which comprises a longitudinal axis (34) which in the closed position lies parallel with the longitudinal axis (32) of the flap shaft (16) and which actuating shaft can be rotated by means of the drive device, in such a manner that the ends (18, 20) of the flap shaft (16) when being raised from the valve seat (24) and pivoted and vice versa about the longitudinal axis (34) of the respective actuating shaft (30) can move on a circular path (36) about the corresponding actuating shaft (30).

10. Flap valve according to at least one of claims 1 to 9, characterised in that the valve seat (24) comprises a sealing surface disposed perpendicular to the axial through-going orifice (14).

11. Flap valve according to at least one of claims 1 to 8, characterised in that the valve seat comprises a sealing surface which extends conically to the axial through-going orifice (14).

12. Flap valve according to any one or several of the claims 4 - 11, characterised in that the first (44) and second (46) lever member in each case comprise approximately an identical length and that the spacing between the longitudinal axis (32) of the flap shaft (16) and the longitudinal axis (34) of the actuating shaft (30) on the one hand and the spacing between the longitudinal axis (34) of the actuating shaft (30) and the articulation (journal 58) of the second lever member (46) on the housing is in each case smaller than the length of the first (44) and second (46) lever member.

13. Flap valve according to claim 12, characterised in that the spacing between the longitudinal axis (34) of the actuating shaft (30) and the articulation (journal 58) of the second lever member (46) on the housing is greater than the spacing between the longitudinal axis (34) of the actuating shaft (30) and the longitudinal axis (32) of the flap shaft (16) (Fig. 2).

## Revendications

1. Vanne papillon (10) comprenant un corps (12) ayant une ouverture axiale de passage (14), un arbre de papillon (16) saillant du corps (12), traversant sensiblement diamétralement l'ouverture de passage (14) et manoeuvrable par un dispositif moteur placé à l'extérieur du corps (12), et un papillon (22) monté sur l'arbre de papillon (16) et destiné à fermer l'ouverture de passage (14), ce papillon (22), lors de son mouvement de sa position d'ouverture à sa position de fermeture de l'ouverture de passage (14), commençant par s'écarter de son siège (24) et ensuite tournant dans l'ouverture de passage (14), et inversement,
caractérisé en ce que l'arbre de papillon (16) est, par au moins une extrémité (20) située à l'extérieur du corps de vanne (12), lié à la fois à un système de leviers (28) articulé sur le corps de robinet ou sur une partie de celui-ci et à un arbre de manoeuvre (30) s'étendant, dans la position fermée, parallèlement à l'axe longitudinal (32) de l'arbre de papillon (16), et ce de façon telle qu'en cas de manoeuvre correspondante de l'arbre de manoeuvre (30), l'extrémité (20) de l'arbre de papillon (16), lors de l'écartement du siège (24) et de la rotation, soit mobile sur une trajectoire circulaire (36) autour de l'arbre de manoeuvre (30).

2. Vanne papillon selon la revendication 1, caractérisé en ce que l'arbre de manoeuvre (30) comprend un élément de manoeuvre (38) solidaire de lui en rotation dans lequel l'arbre de papillon (16) est monté par son extrémité (20) excentriquement par rapport à l'arbre de manoeuvre (30), tournant, et basculant par rapport à l'axe longitudinal (34) de l'arbre de manoeuvre (30).

3. Vanne papillon selon la revendication 2, caractérisé en ce que l'élément de manoeuvre (38) supporte l'arbre de papillon (16) par son extrémité (20) par l'intermédiaire d'une rotule (42) ou d'un dispositif semblable.

4. Vanne papillon selon l'une des revendications 1 à 3, caractérisé en ce que le système de leviers (28) présente un premier et un deuxième leviers (44, 46) qui sont placés sensiblement parallèlement au plan de mouvement de l'élément de manoeuvre (38), le premier levier (44) étant monté sans liberté de rotation relative sur l'extrémité (20) de l'arbre de papillon (16) et le deuxième levier (46) étant lié au premier levier (44) et au corps de robinet ou élément semblable de façon à pouvoir tourner et basculer par rapport à chacun de ceux-ci.

5. Vanne papillon selon la revendication 4, caractérisé en ce que respectivement le premier et le deuxième leviers (44, 46) et le deuxième levier (46) et le corps de vanne ou élément semblable sont liés avec possibilité de rotation et de basculement relatifs par un axe (50, 58) dont une extrémité (52, 60) est fixée au premier ou au deuxième levier (44, 46) respectivement au deuxième levier (46) ou au corps,et dont l'autre extrémité (54, 62) est montée au moyen d'une rotule (56, 64) ou d'un dispositif semblable dans le deuxième ou le premier levier (46, 44) ou respectivement dans le corps ou le deuxième levier (46).

6. Vanne papillon selon au moins une des revendications 1 à 5, caractérisé en ce que l'élément de manoeuvre (38) et le système de leviers (28) sont logés dans un corps (66) ou un élément semblable qui peut être monté sur le corps de vanne (12), le deuxième levier (46) étant articulé sur ce corps (66) ou élément semblable sur le côté opposé au corps de vanne (12).

7. Vanne papillon selon au moins une des revendications 1 à 6, caractérisé en ce que le corps de vanne (12) est pourvu d'un passage du genre coulisse (72) correspondant à la trajectoire circulaire (36) de l'extrémité (20) de l'arbre de papillon (16) et par lequel l'arbre de papillon (16) entre par son extrémité (20) dans le corps (66) ou l'élément semblable.

8. Vanne papillon selon au moins une des revendications 1 à 7, caractérisé en ce que l'élément de manoeuvre (38), qui est placé dans le corps (66) ou l'élément semblable sur le côté dirigé vers le corps de vanne (12) ou le passage du genre coulisse (72), est pourvu d'une manchette d'étanchéité (74) ou d'un élément d'étanchéité semblable, l'élément de manoeuvre (38) étant de préférence un disque couvrant le passage du genre coulisse (72).

9. Vanne papillon selon au moins une des revendications 1 à 8, caractérisé en ce que l'arbre de papillon (16) est lié par chacune de deux extrémités (18, 20) situées à l'extérieur du corps de vanne (12) à la fois à un système de leviers (28) et à un arbre de manoeuvre (30) qui a un axe longitudinal (34) parallèle, dans la position fermée, à l'axe longitudinal (32) de l'arbre de papillon (16) et que le dispositif moteur peut faire tourner, et ce de façon telle que les extrémités (18, 20) de l'arbre de papillon (16), lors de l'écartement du siège (24) et de la rotation et inversement, soient mobiles autour de l'axe longitudinal (34) de l'arbre de manoeuvre (30) associé sur une trajectoire circulaire (36) autour de l'arbre de manoeuvre (30) associé.

10. Vanne papillon selon au moins une des revendications 1 à 9, caractérisé en ce que le siège (24) présente une portée perpendiculaire à l'ouverture axiale de passage (14).

11. Vanne papillon selon au moins une des revendications 1 à 8, caractérisé en ce que le siège présente une portée s'étendant coniquement relativement à l'ouverture axiale de passage (14).

12. Vanne papillon selon une ou plusieurs des revendications 4 à 11, caractérisé en ce que le premier levier (44) et le deuxième levier (46) ont à peu près la même longueur et que la distance entre l'axe longitudinal (32) de l'arbre de papillon (16) et l'axe longitudinal (34) de l'arbre de manoeuvre (30) et la distance entre l'axe longitudinal (34) de l'arbre de manoeuvre (30) et l'articulation (axe 58) du deuxième levier (46) sur le corps sont inférieures chacune à la longueur du premier levier (44) et du deuxième levier (46).

13. Vanne papillon selon la revendication 12, caractérisé en ce que la distance entre l'axe longitudinal (34) de l'arbre de manoeuvre (30) et l'articulation (axe 58) du deuxième levier (46) sur le corps est supérieure à la distance entre l'axe longitudinal (34) de l'arbre de manoeuvre (30) et l'axe longitudinal (32) de l'arbre de papillon (16) (fig. 2).
